Europäisches Patentamt

European Patent Office

Office européen des brevets

(19)

(11) Publication number: **0 033 664**
**A1**

(12) **EUROPEAN PATENT APPLICATION**

(21) Application number: **81300451.2**

(22) Date of filing: **03.02.81**

(51) Int. Cl.³: **B 60 R 16/02**

(30) Priority: **04.02.80 GB 8003645**

(43) Date of publication of application:
**12.08.81 Bulletin 81/32**

(84) Designated Contracting States:
**AT BE CH DE FR GB IT LI LU NL SE**

(71) Applicant: **RIPAULTS LIMITED**
**Southbury Road**
**Enfield Middlesex EN1 1UE(GB)**

(72) Inventor: **Davies, Frederick William**
**8 Otterburn Close**
**Wirral Merseyside(GB)**

(72) Inventor: **Pierce, Brian**
**1, Hinchley Green**
**Maghull(GB)**

(74) Representative: **Messulam, Alec Moses et al,**
**MARKS & CLERK 57/60 Lincoln's Inn Fields**
**London WC2A 3LS(GB)**

(54) Vehicle wiring system.

(57) To replace a conventional wiring harness of a vehicle, the invention proposes remote switching employing a master computing unit (10) communicating with slave units (12, 14, 16, 18, 20) which are distributed about the vehicle in the vicinity of the equipment to be energized. The slave units (12, 14, 16, 18, 20) additionally transmit back to the master unit (10) information on faulty equipment, enabling the master unit (10) to provide the driver with a visual indication and identification of an electrical fault. The slave units (12, 14, 16, 18, 20) also include A/D converters to send in digital form to the master unit information derived from sensors such as temperature and pressure sensors.

./...

EP 0 033 664 A1

FIG.I.

vehicle wiring system

The present invention relates to a vehicle wiring system.

Conventionally, a wiring system in a motor vehicle such as a car consists of a wiring harness connecting the various components such as the lights, windscreen wipers etc., via the control switches on the dashboard to the vehicle battery. The harness is itself necessarily complicated involving a large number of wires of different lengths which need to be colour coded for identification and which are provided with different types of terminals. The production of a wiring harness therefore entails a large amount of labour and furthermore a purpose built harness is required for each vehicle model and indeed the wiring harnesses differ between versions of the same model. Consequently, the vehicle manufacturer requires large stocks of harnesses to meet all his needs. A still further disadvantage is the labour involved in installing a wiring harness and to an even greater extent its replacement in a used vehicle if it should become damaged.

The present invention therefore seeks to provide a simplified wiring system which is capable of mitigating at least some of the foregoing disadvantages.

In accordance with the present invention, there a vehicle wiring system comprises a power supply cable extending from a live terminal of the vehicle battery to the vicinity of each electrical component to be energised, a master computing unit connected to switches on the dashboard, slave units arranged in the vicinity of the components to be energised and connected by a signal line to the master computing unit, and switch means controlled by the slave units in dependence upon instructions received by way of the signal line from the master unit, the slave units being further operative to send to the master unit a signal indicative of correct or incorrect operation of the components.

Preferably, the master unit is further connected to a display controlled by the master unit to provide a visible indication identifying any faulty component.

Advantageously, the master unit is additionally arranged to provide a visual indication on the dashboard of the various operating parameters of the vehicle such as oil pressure, water temperature, alternator voltage and contents of the fuel tank, the slave units being connected to sensors and being arranged to transmit such information to the master processing unit over the said signal line.

The invention will now be described further, by way of example, with reference to the accompanying drawings, in which;

Figure 1 is a block diagram of a wiring system in accordance with the present invention,

Figure 2 is a detailed diagram of the :_ hardware conatined in the master computing unit, and

Figure 3  shows the hardware of each of the slave units.

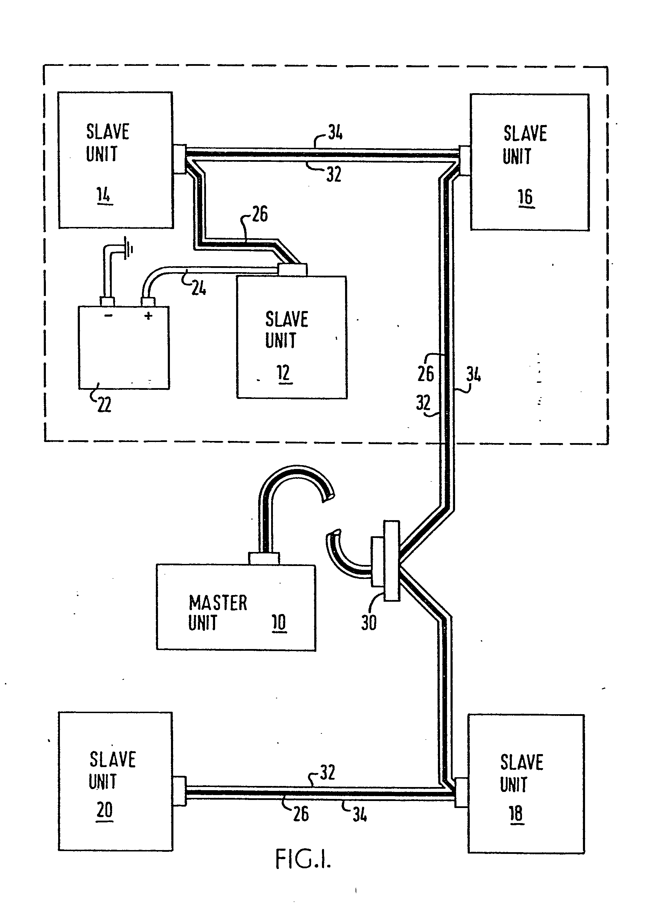

The system in Figure 1 consists of a master computing unit 10 connected to five slave units designated 12, 14, 16, 18 and 20.  The slave unit 12 is connected to the live terminal of the vehicle battery 22 by means of a starter cable 24 and a thinner gauge power cable 26 connects the live terminal of the battery in turn to the slave  units  · 14, 16 18 and 20 and additionally to the master unit 10, a three-way plug and socket 30 being provided at the branch leading to the master unit 10.

Additionally, a signal line 32 is passed around the car connecting the master unit 10 to all the slave processing units and if required an earthline 34 is additionally provided.  An earthline is required where there is no return path through the vehicle body, for example where the body of the vehicle is of fibreglass.

Each of the slave units has a plurality of switches which may be relays but are preferably electronic switches such as power transistors. Each slave unit is connected by a set of short wires to a few adjacent components.

The master unit controls the operation of the slave units and also supports the driver interface; two displays and up to twenty two switches. The slave units are each capable of controlling and monitoring eight switching channels, each unit can also monitor eight analogue channels as described further below.

By mounting the master unit in proximity to the user of the vehicle dashboard it is possible for the majority of data inputs controlling system functions to be fed directly into the master unit. However certain data, e.g. oil pressure, is collected remotely.

System functions can be divided into three categories. The first category consists of functions controlled directly from the master unit e.g. Sidelights, Headlights, Indicators, Fans, Horns, Starter motor, Ignition coil feed, Stop lights, Reversing lights, and other dashboard controlled functions.

Although the stop and reversing lights are included in this category it may in some harness configurations be desirable to sense those switches remotely.

The second category may be termed remote functions and includes oil pressure sense, fuel level sense, temperature sense, and alternator output sense.

Finally, some functions require special consideration and form a special category. For example, because of the nature of the electronic system it is not possible to use the conventional parking circuit for the windscreen wiper. Instead, it is necessary to sense the parking switch and use this information in conjunction with steering column switches to control the motor.

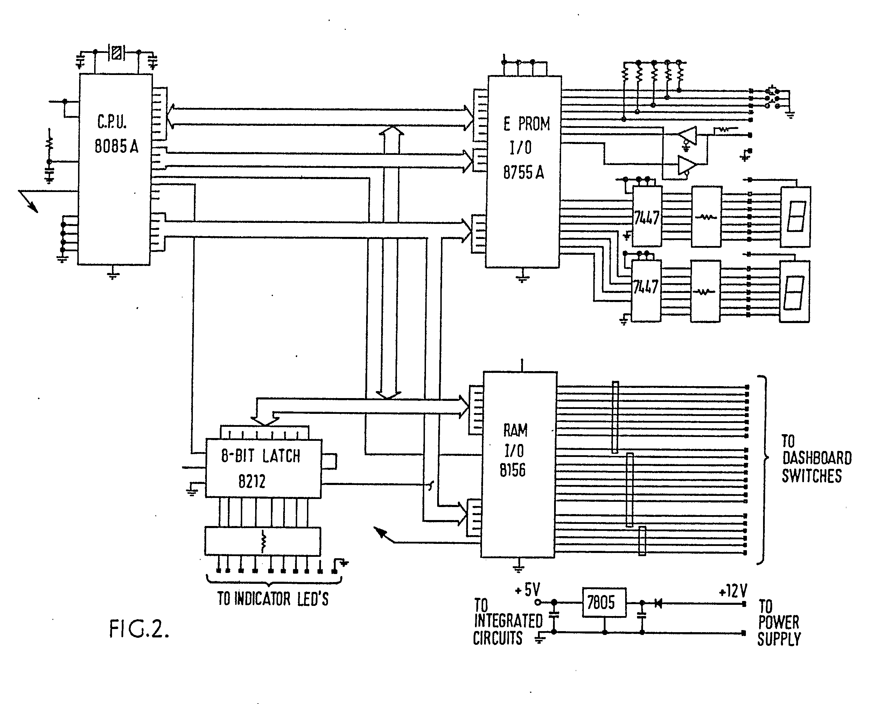

The master computing unit of a practical embodiment is based upon an Intel minimum MCS85 chip set. This comprises three devices: 8085A (CPU), 8156 (RAM and I/O), 8755A (EPROM and I/O) connected in the manner shown in the circuit of Figure 2. The system is augmented by an 8212 eight bit latch which provides an additional eight output lines for driving indicator light emitting diodes.

The master unit is constructed on a single PCB placed behind the dashboard. Connectors for swith inputs, display serial I/O and power are

brought out to the edge of the board. Ribbon cable is used for all connections to the board.

The twenty two I/O lines of the 8156 RAM are used for reading switch inputs from the dashboard, steering column and other switches. These lines are active low, i.e. a switch closure causes the appropriate line to be tied to ground. This provides for fail safe operation in that in the event of any fault in the computing system power is maintained to the various components. The master unit controls two displays, the first being a two digit decimal display driven from the 8755A central processing unit via two 7447 TTL BCD to 7-segment decoders. This display operates in two modes:

1.      Display of driver requested information from analogue sensors, e.g. temperature.

2.      Display of system faults (blinking mode).

Mode 1 display information is selected by actuation of switches connected to the 8755A EPROM.

Mode 2 is a default mode and is entered automatically on occurence of a system fault identified by the flashing number.

The second display consists of eight individual LED's used for warning lights. They are driven by the 8212 output latch.

Communication to the slave units utilises the bit programmable I/O lines of 8755A. The serial

I/O line (PA7PA6) interfaces with the data bus of the wiring harness through two 74125 TTL tri-state buffers arranged back-to-back forming a single bi-directional buffer. Another I/O line (PA5) controls the buffer mode.

The CPU clock is driven by an external 6MHz crystal. This provides an accurate time base for serial communication. In addition, the clock output (CLK) of the CPU feeds the timer of the RAM which is used for deriving real time functions. The timer is programmed to run continuously and interrupts the CPU at a software controllable time interval _via_ the interrupt input.

Power to the microcomputer is supplied by a 7805+5V voltage regulator. An in-line diode protects the regulator against inversion of the 12V supply. Drop at this supply occurs when the bus line-voltage falls below approximately 6.5V.

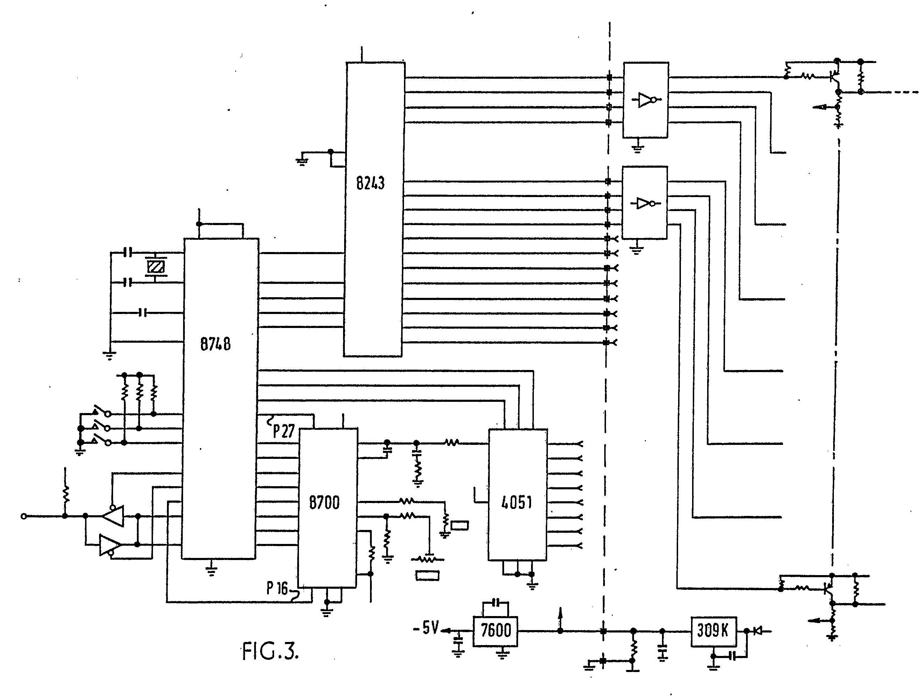

Each slave unit (Fig. 3) is based upon the Intel 8748 single chip microcomputer. This device is a member of the MCS48 family, it is a UV EPROM version of the 8048.

The slave units are constructed on two PCB's. One board carries the microcomputer and data acquisition circuits, the other power transistor, drivers and resistor networks for monitoring of the outputs. The boards are mounted in a diecast box with all connections brough to a single nylon multiway socket.

Like the master unit, the slaves have an external 6 MHz crystal as a frequency reference. This permits accurate matching of the bit rates between master and slave.

Address of the slave unit is read in from three switches. The three switches allow the master to control up to eight slave units.

Since the stand-alone 8748 does not have enough I/O lines to meet the full requirements of the slave unit, it is used in conjuction with an Intel 8243 I/O expander chip. This interfaces directly to the 8748 at the expense of 4 I/O lines, providing an additional sixteen programmable I/O lines. Each switching channel of the slave has two of these lines dedicated to it, one output (P40-53) for controlling the power switches and one input (P60-P73) for monitoring the load.

Analogue data acquisition is from a Teledyne 8700 eight bit CMOS analogue-to-digital converter. Under microcomputer control it is possible to select one of eight analogue inputs via a CMOS 4051 multiplexer. Channel selection is determined by 3 I/O lines (P24-P26). A/D conversion is initiated by a 0-1-0 transition on a converter line and completed conversion is signalled by a status line going low. Data is read into the microcomputer through an eight bit port.

The serial I/O line interfaces with the data bus of the wiring harness through a buffer similar to that of the master buffer. Two I/O lines control the buffer mode.

The serial line also connects to the interrupt input of the 8748. This signals arrival of data when the buffer is in the input mode and the internal interrupt logic of the 8748 is enabled.

Power switching in the save units is performed by PNP Darlington power transistors. The devices used (Lamda PMD 13K40) have an 8A continuous rating and a minimum current gain of eight hundred. Drive from the microcomputer is stepped up by open collector drivers on the switching board.

Resistor networks monitor the O/P circuits of the power transistors when in the off state. If a normal load is present, the output of the network is a logic '0' otherwise the output is a logic 'i'. This would occur in the event of a lamp filament failing (open circuit). A short ciruit output would blow the output line fuse and the O/P will appear O/C indicating a fault condition.

The output is also monitored when the switching channel is in the on state. This is achieved by turning the power transistor off for a short time. When saturated it takes approximately

25 μs for the device to turn off. After this time, valid data can be read by the 8748 and the channel returned to active status. The short off time does not permit lamp filaments to cool thus minimising stress on the lamp.

The microcomputer board is powered by a similar regulator arrangement to the master. In addition, a -5V rail is provided for the ADC. This is generated from the +5V rail by an Intersil 7600 CMOS voltage converter. Power to the switching board is taken directly from the unregulated 12V supply.

Communication between master and slaves is always initiated by the master transmitting a command. Command words consist of ten bits, one start bit (low), eight data bits and one stop bit (high). Each bit is 20 μs wide, i.e. the transmission rate is 50K bits$^{-1}$. When not in use, the default state of the data bus is high.

The eight data bits consist of an analogue channel request, three slave address bits, three slave channel address bits and one bit for selecting channel state for switching command (0 = on).

This format allows control of eight slave units each with eight switching and eight analogue channels. The system may be expanded to control more slave units by increasing the number of address bits, e.g. an additional bit doubles the possible number of slave units.

Following a command, the addressed slave replies with a word also containing eight bits. If the command was an analogue data request, the result of the last conversion is returned. If switching, the load monitoring data is returned, i.e. start bit followed by either eight zeros or eight ones (0 = normal). Commands are transmitted cyclicly, i.e. the complete set of commands is transmitted; the sequence is then repeated.

In use, the master unit collects all data relevant to the system operation from either the slave units or directly from switches on the dashboard. Having accepted information from the data inputs, the master transmits appropriate commands to each component of the system e.g. if the brake light switch is on, it transmits commands to the slave units which will turn on the power to the bulbs. The master cycles around all components of the system during a control cycle. Once completed, the cycle is repeated, because this method of repeated transmission eliminates spurious commands that may occur due to electrical noise. Following transmission of each command there is a time slot during which the slave addressed can return data relating to the command to the master. For example, if the command is to switch on a lamp that is broken, the slave unit informs the master which makes this information available to the driver of the vehicle.

An additional feature of the master is
its potential to communicate with processors controlling
other subsystems of the vehicle. It might, for example,
pass information from the fuel tank and the rod
speed sensors to a trip computer.

WE CLAIM:

1. A vehicle wiring system comprising a vehicle battery and components to be energized by power from the battery under the control of driver operable switches, characterised by a power supply cable (26) extending from a live terminal of the vehicle battery (22) to the vicinity of each electrical component to be energised, a master computing unit (10) connected to the driver operable switches, slave units (12,14,16,18 and 20) arranged in the vicinity of the components to be energized, a signal line (32) connecting the slave units (12 to 20) to the master computing unit (10) and switch means controlled by the slave units in dependence upon instructions received by way of the signal line (32) from the master unit (10), the slave units being further operative to send the master unit (10) a signal indicative of correct or incorrect operation of the components.

2. A wiring system as claimed in Claim 1, further comprising a display controlled by the master unit (10) to provide a visible indication identifying any faulty component.

3. A wiring system as claimed in Claim 1 or 2, wherein the logic system employed is such that a "switch on" command is transmitted by the signal line going low whereby in the event of failure the electical components of the vehicle remain operational.

4. A wiring system as claimed in Claim 1, wherein the master unit (10) is connected to a visual display to provide an indication of operating perameters of the vehicle corresponding to gauges conventionally found on vehicle dashboards, wherein analogue sensors for the respective perameters are connected to the slave units (12 to 20) and the slave units include analogue two digital convertors and multiplexors to transmit data from the sensors digitally for the master unit (10).

5. A vehicle wiring system as claimed in any preceding Claim, wherein the operating instructions are transmitted cyclically from the master unit (10) to the slave units (12 to 20) instructions being transmitted for controlling each item of equipment of the vehicle in turn during each cycle and the cycles repeating continuously.

6. A wiring system as claimed in Claim 5, wherien in order to avoid interference from superior signals, the slave units are operative to verify instructions by comparing the instructions to a plurality of cycles before acting on the switch means.

0033664

FIG.I.

FIG.2.

FIG.3.

## European Patent Office

## EUROPEAN SEARCH REPORT

| | DOCUMENTS CONSIDERED TO·BE RELEVANT | | | CLASSIFICATION OF THE APPLICATION (Int. Cl.³) |
|---|---|---|---|---|
| Category | Citation of document with indication, where appropriate, of relevant passages | | Relevant to claim | |
| | DE – A1 – 2 433 025 (BOSCH) * claims 1, 21 to 25 * -- | | 1,2,4, 5,6 | B 60 R 16/02 |
| P | DE – A1 – 2 843 135 (FORD-WERKE) * claims 1 and 12 * & US – A – 4 227 181 -- | | 1,2,4 | |
| | DE – A1 – 2 338 882 (BOSCH) * claim 13; page 3, lines 7 to 28 * -- | | 1,2 | |
| | DE – A1 – 2 442 067 (TOYO KOGYO CO.) * claim 1 * & US – A – 4 136 333 -- | | 1 | TECHNICAL FIELDS SEARCHED (Int. Cl.³) B 60 R 16/00 |
| | DE – A1 – 2 724 759 (FIAT) * page 7, line 11 to page 8, line 8 * & US – A – 4 156 151 -- | | 1 | |
| | DE – A1 – 2 744 031 (PREH) * claim 1 * -- | | 1 | |
| | DE – A1 – 2 806 677 (D. PHILIPP) * claims 1 and 2 * -- | | 1 | CATEGORY OF CITED DOCUMENTS |
| | DE – A1 – 2 909 213 (WARD & GOLDSTONE) * claim 1 * ---- | | 1 | X: particularly relevant A: technological background O: non-written disclosure P: intermediate document T: theory or principle underlying the invention E: conflicting application D: document cited in the application L: citation for other reasons |

|X| The present search report has been drawn up for all claims

&: member of the same patent family, corresponding document

| Place of search Berlin | Date of completion of the search 23-04-1981 | Examiner BECKER |
|---|---|---|

EPO Form 1503.1   06.78